# EUROPEAN PATENT APPLICATION

(11) **EP 0 953 935 A2**
(43) Date of publication of application: **03.11.1999**
(21) Application number: 99201118.9
(22) Date of filing: 08.04.1999
(51) Int. Cl.: G06K 17/00, H04N 1/00, G03B 25/02, G07F 17/26

(54) **An electronic motion image capture, display and print system for use in a theme park**

(30) Priority: 22.04.1998 US 64383
(71) Applicant: EASTMAN KODAK COMPANY, Rochester, New York 14650-2201 (US)
(72) Inventor: Mittelstaedt, Brian E., Eastman Kodak Company, Rochester, New York 14650-2201 (US); Niskala, Wayne F., Eastman Kodak Company, Rochester, New York 14650-2201 (US); Neel, John C., Eastman Kodak Company, Rochester, New York 14650-2201 (US)
(74) Representative: Lewandowsky, Klaus, Dipl.-Ing.

(57) **Abstract**

A theme park system (10) for electronic photography includes an electronic camera (12) for capturing a motion image sequence; a preview station (15) for collecting storing and displaying (18) the motion image sequences captured by the electronic camera; and a fulfillment station (22) for producing a lenticular image of the captured motion image sequence

## Description

### FIELD OF THE INVENTION

The invention relates generally to the field of lenticular devices for the display of motion sequences and more particularly to a system and associated method for capturing and displaying motion sequences captured in a theme park.

### BACKGROUND OF THE INVENTION

Theme parks are able to augment their guests' entertainment experience by capturing and producing images which are impossible for the guest to capture themselves. For example, Walt Disney World captures images of their guests as they plunge over the falls at "Splash Mountain." Upon exiting the ride, guests are able to view images of their car as it was imaged plunging over the falls. By recording the identification number of the image in which they appear, they may proceed to a fulfillment area where a hardcopy image can be produced and purchased. The image becomes a remembrance of their experience on the ride which may be conveniently shared with family and friends. Also, see U.S. Patent 5,694,514, issued December 2, 1997 to Evans et al. which shows a system and method for creating personalized image collections (both still and video) from multiple locations by using a communications network.

Several major shortcomings exist to these prior art solutions. For the still images, the moment of capture must be selected to be the most probable time at which all guests will be captured in a complementary and "telling" fashion. Often one person's head can be occluded by the head or arm of another guest on the ride at time of capture, or the expression which summarizes the guest's reaction to the ride occurs before or after the time of capture. Secondly, the image captures an instant of the ride experience and as such is limited in its ability to recreate the moment the guest wishes to remember. Since the rides can be expensive and possibly involve a long wait, a missed photo can mean that a once in a lifetime experience is lost to eternity.

For the video image capture systems, most of these problems are overcome, however, the images need to be viewed on a video player connected to a television set. Such images are not convenient for spontaneous viewing and sharing. There is a need therefore for an improved system for capturing and recording images in a theme park environment.

### SUMMARY OF THE INVENTION

The present invention is directed to overcoming one or more of the problems set forth above. Briefly summarized, according to one aspect of the present invention, a theme park system for electronic photography includes an electronic camera for capturing a motion image sequence; a preview station for collecting, storing, and displaying the motion image sequences captured by the electronic camera; and a fulfillment station for producing a lenticular image of the captured motion image sequence.

By employing a motion camera, a slice of the ride experience is captured. This significantly increases the probability of capturing the guest at the decisive moment and more completely records the experience of the guest. The difficulty with conventional motion sequence display is that conventional means for displaying and sharing a motion sequence such as a TV and VCR limit the sharing experience to times and places where the display equipment is available. The solution to this problem is a system in which a motion snippet is captured of the guests on a ride and a lenticular image is produced which displays the motion sequence.

These and other aspects, objects, features, and advantages of the present invention will be more clearly understood and appreciated from a review of the following detailed description of the preferred embodiments and appended claims, and by reference to the accompanying drawings.

### BRIEF DESCRIPTION OF THE DRAWINGS

Fig. 1 is a schematic block diagram of the theme park system for electronic photography according to the present invention;
Fig. 2 is a diagram illustrating the display in the preview station of Fig. 1;
Fig. 3 is a perspective view of a lenticular image of the motion image sequence produced according to the present invention;
Fig. 4 is a schematic diagram illustrating the camera placement of an embodiment of the present invention in a thrill ride;
Fig. 5 is a flow chart showing the operation of the preview station;
Fig. 6 is a screen view showing the preview image;
Fig. 7 is a flow chart showing the operation of the fulfillment station;
Fig. 8 is a view of the display and the input device at the fulfillment station; and
Figs. 9 - 12 are diagrams showing particular formats for the motion lenticular image.

To facilitate understanding, identical reference numerals have been used, where possible, to designate identical elements that are common to the figures.

### DETAILED DESCRIPTION OF THE INVENTION

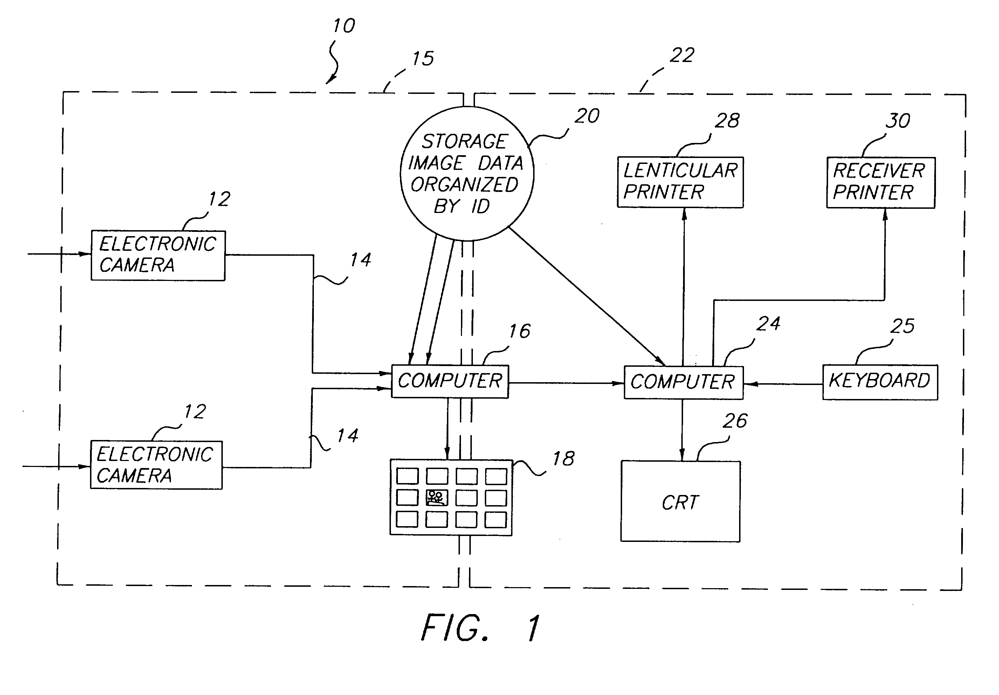

Referring to Fig. 1, a theme park system 10 for electronic photography according to the present invention is shown. The system includes one or more electronic cameras 12 that are carried by a photographer or located at a position relative to a theme ride or event in a theme park where interesting or exciting action takes place. The camera 12 is an electronic color camera capable of capturing motion image sequences at a variety of frame rates to allow the optimization of frame rate to the venue of interest, and capable of remote triggering. The KODAK EKTAPRO Motion Analyzer, Model 1000HRC available from Eastman Kodak Company, Rochester, New York, is an example of a commercially available camera which provides these features.

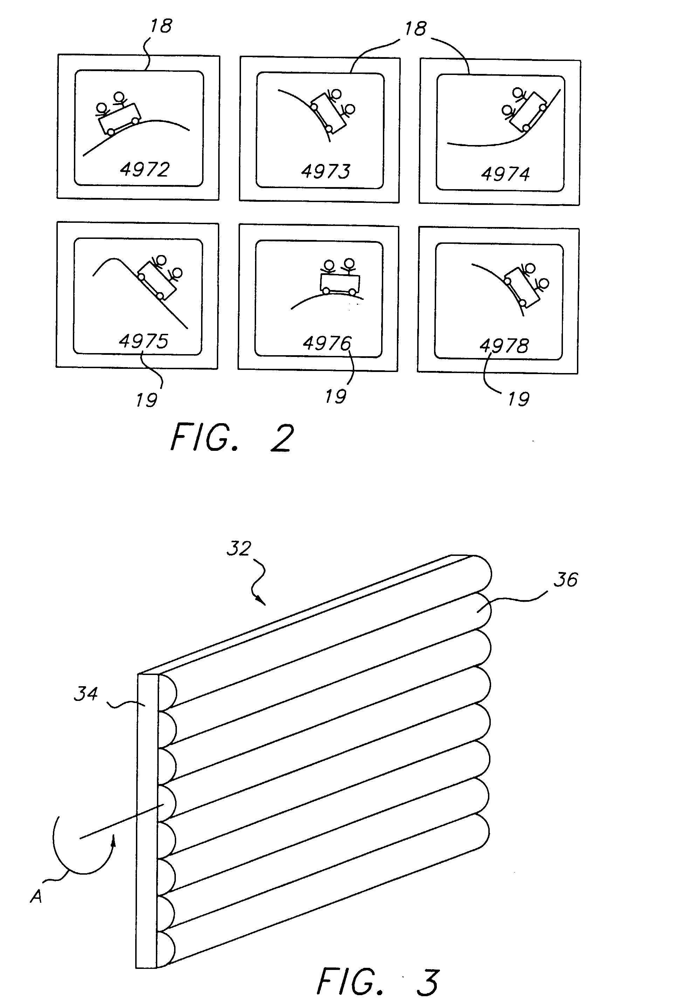

The camera may be triggered automatically by a switch on a theme ride or by an operator. A motion sequence of a guest is captured and transmitted through a data network 14 to preview station 15, located for example near the exit of the ride. The data network can have both wired and wireless communication links. In the event that the camera 12 is portable and carried by an operator, the data network 14 may be provided by a tether, or a wireless link to the preview station which may be located near the operator. The preview station 15 includes a preview computer 16, such as a SUN SPARC workstation. The preview computer 16 generates a unique image ID for the motion sequence and displays the motion sequence with its ID on a preview display 18 such as a CRT screen. In a preferred embodiment of the invention, several displays 18 are provided at the preview station as shown in Fig. 2, so that several recently acquired motion image sequences may be displayed at one time.

The preview computer 16 writes the motion sequence image data to a storage device 20, such as a hard magnetic disc or optical disc drive, organizing the image data using the ID generated. At the preview display 18, guests may view their motion sequence images and decide if they wish to purchase them. The image displayed on the preview display 18 simulates the appearance of the completed lenticular motion image. If the guest is pleased with the sequence captured, she proceeds to a fulfillment station 22 with the ID of the desired image. The IDs 19, such as the car number of a thrill ride, are included on the preview display.

The fulfillment station 22 includes a fulfillment computer 24. A fulfillment display 26 (such as a color CRT), a lenticular motion image printer 28, a keyboard 25 and a receipt printer 30 are connected to the computer 24. At the fulfillment station 22, an operator enters the ID number on keyboard 25 given by the guest and verifies with the guest that the correct motion sequence has been selected by displaying it on the fulfillment display 26 (such as a CRT). Once confirmed, the image data is sent to the lenticular motion image printer 28 and a lenticular motion image of the motion image sequence is produced. The lenticular image printer 28 may comprise for example a 300 dpi thermal printer such as the Kodak XLS 8650 Thermal Color Printer available from the Eastman Kodak Company, Rochester, New York. A receipt for the transaction is produced by receipt printer 30. It is noted that the preview station and the fulfillment station may both be located at the same place.

Referring to Fig. 3, the motion lenticular image 32 includes a lenticular print 34 that is positioned behind a lenticular overlay 36. The lenticular overlay 36 comprises an array of parallel cylindrical lenses, the axes of the lenses being arranged in a horizontal direction. The motion lenticular image 32 is viewed by rotating the image about a horizontal axis A, whereby the plurality of still images making up the motion sequence are sequentially visible to the viewer. The lenticular image data for the lenticular print 34 is produced by taking spatially correspondent lines from images in the motion sequence which have been subsampled in the vertical direction and interleaving them. For example, line 1 under lenticule 1 of the lenticular image corresponds to line 1 of the first image in the motion sequence; line 2 under lenticule 1 corresponds to line 1 of the second image in the motion sequence. The interleaved image data is then printed by the digital printer 28 and the resultant lenticular print 34 is registered with the lenticular overlay 36 as is well known in the art.

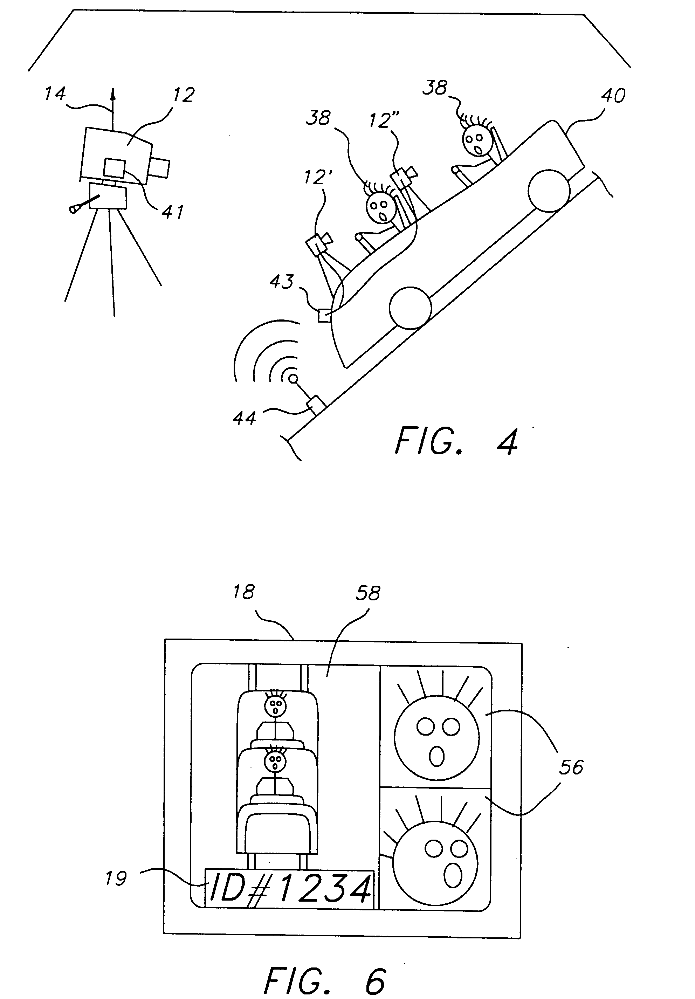

Referring to Fig. 4, in a preferred embodiment of the present invention, the theme park system is employed on a thrill ride, such as a roller coaster where the customers 38 sit in a car 40. One camera 12 is located where it can capture an image of the ride at a point of maximum thrill. This camera may be mounted on a turret 42 capable of panning the camera to follow the motion of the car 40. Other cameras 12', 12" are located in the car 40 to capture the expressions on the faces of the customers 38. The cameras 12, 12' and 12" can be video resolution or higher, depending on the size of the motion lenticular image and the resolution capabilities of the printer 28 used to generate the lenticular print. The cameras 12, 12' and 12" are triggered to capture a motion sequence, for example by a trigger 44 that activates an RF transmitter in response to the passage of the car 40. Camera 12 is provided with an RF receiver 41 that triggers the camera to record a motion image sequence. The car 40 is likewise provided with an RF receiver 43 that is coupled to cameras 12' and 12" to trigger these cameras when the car passes the trigger point. Image data from the cameras 12, 12' and 12'' is transmitted to the preview station 15 (see Fig. 1) over the data network 14. The image data from cameras 12' and 12" can be transmitted, for example, over a wireless communication link.

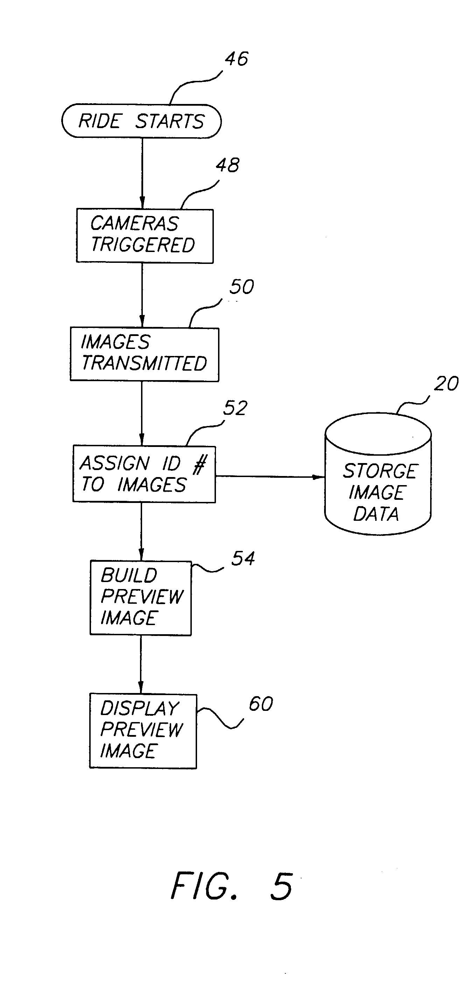

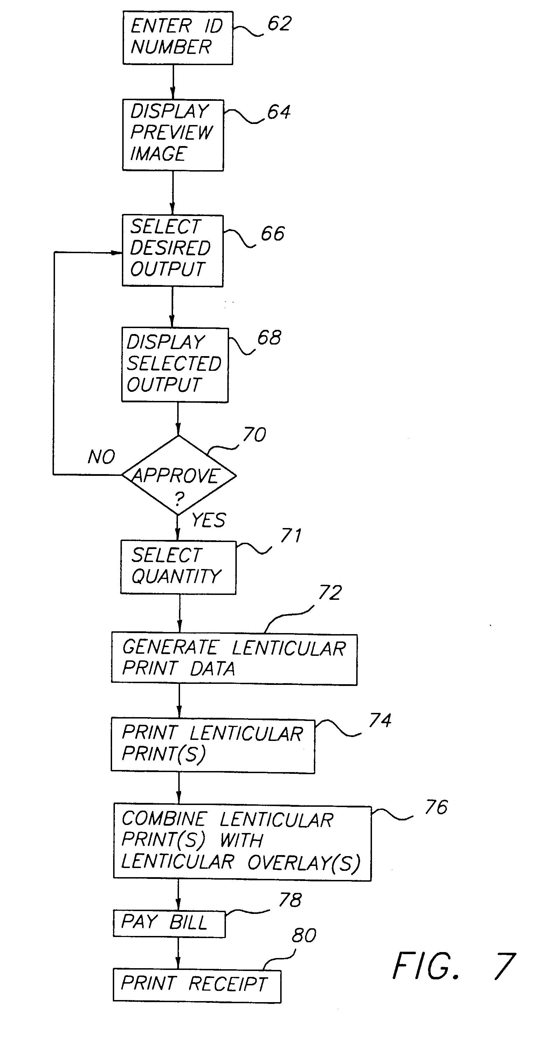

Referring to Fig. 5, the operation of the preview station 15 will now be described. After the customers board the car 40, the ride is started (46). When the car 40 reaches the trigger 44, the cameras 12, 12' and 12" are triggered (48) to capture respective motion sequences. The cameras then transmit their images (50) to the computer 16 in the preview station 15. The computer 16 assigns ID numbers (52) to the captured image data and sends the image data along with the corresponding ID numbers to the image storage 20. The computer 16 then builds the preview image (54). Referring to Fig. 6, the computer 16 builds the preview image by placing the face images 56 captured by the face cameras 12' and 12" in windows beside the image 58 of the car captured by camera 12, and appending the ID number 19 to the image. The preview image is then displayed (60) on one of the preview display CRTs 18. After exiting the ride the customers view their experience as displayed on the preview screen 18. If the customer is interested in purchasing a motion card of the captured motion sequence, the ID 19 is recorded on a slip of paper by an attendant at the preview station or by the customer. The customer then proceeds to the image fulfillment area.

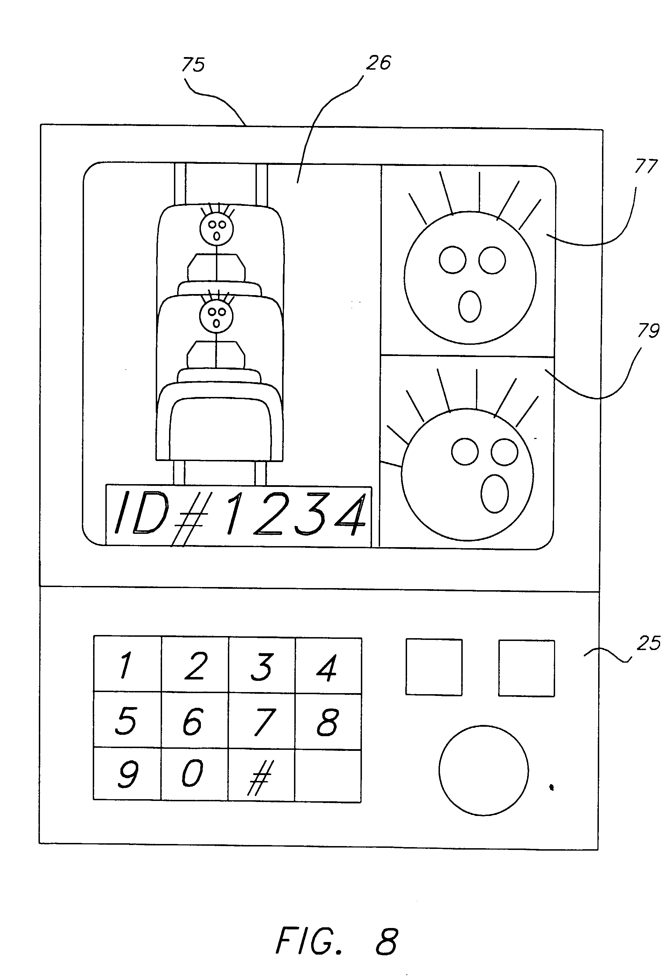

Referring to Fig. 7, the operation of the fulfillment station 22 will now be described. The customer enters the fulfillment area of the ride and presents the slip of paper with the ID number 19 to an operator. The operator keys in the ID number (62) and a preview of the motion sequences are displayed (64). A preferred embodiment of such a preview is illustrated in Fig. 8. The customer selects which motion sequences are desired, for example, view of car, view of rider(s), view seen from car, etc. The customer may then select a desired output, for example, which creative border in which the motion sequences will be printed (66). It is anticipated that a customer may also choose a non-motion print of one of the frames of the motion image. The motion sequences are then combined with the creative borders and displayed (68) for the customer's approval (70). If the customer is not pleased with some aspect of the selected output, the process restarts with the selection of the output desired (66). After approving the output, the customer selects the product quantity (71). The customer input is then used to retrieve the appropriate motion data from storage archive 20 and the motion data is employed to form the digital data suitable for printing (72). The prepared data is then transmitted to the lenticular printer and printed (74). The operator then combines the lenticular print in proper registration with a lenticular overlay (76). The lenticular print is then presented to the customer and the customer pays for the print (78). A receipt is printed (80) and also given to the customer.

Referring to Fig. 8, the operator, using keyboard 25, or for example, a touch screen display 26, can display the motion image sequences 75, 77, and 79 from the cameras 12, 12' and 12" respectively, for the customer's review and approval. The operator, at the direction of the customer can deselect one or more of the motion sequences, for example sequence 77, from the display.

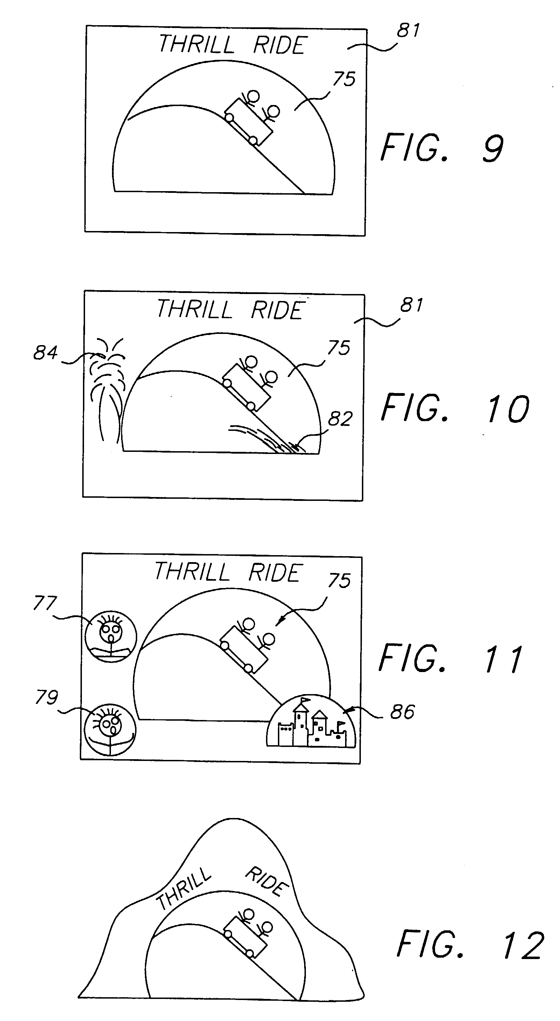

Referring to Fig. 9 through 12, a variety of possible embodiments of the lenticular motion images will be described. Referring to Fig. 9, a simple rendition of the motion sequence involves displaying the motion sequence 75 in a creative background 81 which is themed to the ride to produce a lenticular motion image. Fig. 10 illustrates an enhancement that adds motion effect to the creative surround such as water flowing 82, skyrockets 84, etc. Fig. 11 illustrates a further enhancement which includes multiple motion sequences 75, 77, and 79 to be displayed on a single card. The main view 75 might be the view of the ride, while the other views 77 and 79 would show the reaction of the riders in insets in the card, and possibly, the view 86 as seen from the ride. As shown in Fig. 12, another enhancement to the lenticular motion image is in providing a unique overall shape for the motion image itself reminiscent of the shape of the theme ride, such as Walt Disney World's Splash Mountain theme.

The invention has been described with reference to a preferred embodiment. However, it will be appreciated that variations and modifications can be effected by a person of ordinary skill in the art without departing from the scope of the invention.

### PARTS LIST:

- 10: theme park system
- 12, 12', 12": electronic camera
- 14: data network
- 15: preview station
- 16: preview computer
- 18: preview display
- 19: ID
- 20: data storage device
- 22: fulfillment station
- 24: fulfillment computer
- 25: keyboard
- 26: fulfillment display
- 28: digital printer
- 30: receipt printer
- 32: motion lenticular image
- 34: lenticular print
- 36: lenticular overlay
- 38: customers
- 40: car
- 41: RF receiver
- 42: turret
- 43: RF receiver
- 44: trigger
- 46: start ride step
- 48: trigger camera step
- 50: transmit image step
- 52: assign ID's step
- 54: build preview image step
- 56: face images
- 58: image of car
- 60: display preview image step
- 62: enter ID step
- 64: display preview image step
- 66: select desired output step
- 68: display selected output step
- 70: customer approval step
- 71: select quantity step
- 72: generate print data step
- 74: print step
- 75: motion image sequence
- 76: combine print with overlay step
- 77: motion image sequence
- 78: customer pay step
- 79: motion image sequence
- 80: print receipt step
- 81: creative background
- 82: water flow effect
- 84: skyrocket effect
- 86: view of scene from ride

## Claims

1. A theme park system for electronic photography, comprising:
a) an electronic camera for capturing a motion image sequence;
b) means for collecting, storing, and displaying the motion image sequences captured by the electronic camera; and
c) means for producing a lenticular motion image of the captured motion image sequence.

2. The system claimed in claim 1, further comprising means for selecting one frame of the motion image sequence, and means for producing a print of the selected frame.

3. The system claimed in claim 1, wherein:
a) the means for collecting storing and displaying the motion image sequences are located at a preview station and comprises a computer for receiving the image from the electronic camera and assigning an identification code to the motion image sequence, an image storage device connected to the computer by a high speed data network for storing the image motion sequence, and a CRT connected to the computer for displaying the image motion sequence;
b) the means for producing a lenticular image of the captured motion image sequence is located at a fulfillment station and comprises a computer connected to the image storage device for receiving the image motion sequence and further processing the image motion sequence, and a lenticular image printer for printing the lenticular image of the motion image sequence.

4. The system claimed in claim 3, wherein the means for producing a lenticular image of the captured motion image sequence further includes means for the customer to select which motion image sequence to be printed.

5. The system claimed in claim 4, wherein the means for the customer to select is a touch screen CRT.

6. The system claimed in claim 1, further comprising another electronic camera for capturing another motion image sequence, and image processing means for combining the motion image sequences for display in a single lenticular motion image.

7. The system claimed in claim 1, further comprising means for adding a creative border to the lenticular motion image.

8. The system claimed in claim 1, further comprising means for adding creative motion effects to the lenticular motion image.

9. The system claimed in claim 1, wherein the lenticular motion image has a shape reminiscent of the theme ride.

10. A method of theme park photography, comprising the steps of:
a) capturing a motion image sequence with an electronic camera;
b) collecting, storing, and displaying the motion image sequences captured by the electronic camera; and
c) producing a lenticular motion image of the captured motion image sequence.

11. The system claimed in claim 10, further comprising the step of selecting one frame of the motion image sequence, and producing a print of the selected frame.

12. The method claimed in claim 10, wherein the step of producing a lenticular image of the captured motion image sequence further includes the step of selecting which motion image sequence is to be printed.

13. The method claimed in claim 1, further comprising the steps of capturing another motion image sequence with another electronic camera, and combining the motion image sequences for display in a single lenticular motion image.

14. The method claimed in claim 10, further comprising the step of adding a creative border to the lenticular motion image.

15. The method claimed in claim 10, further comprising the step of adding creative motion effects to the lenticular motion image.
